# EUROPÄISCHE PATENTSCHRIFT

(11) **EP 1 316 250 B1**
(45) Veröffentlichungstag und Bekanntmachung des Hinweises auf die Patenterteilung: **18.07.2007**
(21) Anmeldenummer: 02025902.4
(22) Anmeldetag: 20.11.2002
(51) Int. Cl.: A01D 43/08

(54) **Selbstfahrender Feldhäcksler**
Self-propelled harvester
Faucheuse-hacheuse automotrice

(30) Priorität: 03.12.2001 DE 10158953
(43) Veröffentlichungstag der Anmeldung: 04.06.2003
(73) Patentinhaber: CLAAS Selbstfahrende Erntemaschinen GmbH, 33428 Harsewinkel (DE)
(72) Erfinder: Dykstra, Martin, 06917 Jessen (DE); Wienecke, Carsten, 59609 Anröchte (DE); Isfort, Heinrich, 48249 Dülmen (DE); Deppe, Markus, 33739 Bielefeld (DE)

(56) Entgegenhaltungen:
- DE-A- 3 727 156
- DE-U- 29 507 353
- GB-A- 2 012 540
- GB-A- 2 140 285
- US-A- 4 665 929
- US-A- 4 696 432

## Beschreibung

Die Erfindung betrifft einen Feldhäcksler mit einer rotierenden Häckseltrommel, an die sich ein in Transportrichtung verjüngender Förderschacht anschließt, der an seinem gutabgabeseitigem Ende in einem Auswurfschacht mündet, wobei hinter der Häckseltrommel eine, das Häckselgut auf den verjüngenden Auslass des Förderschachtes zusammenführende Einrichtung angeordnet ist.

Nach dem DBP 3727156 ist ein Feldhäcksler bekannt, bei welchem vor dem sich verjüngendem Förderschacht ein rotierender zylindrischer Grundkörper angeordnet ist, dessen Endbereiche mit zur Mitte hin fördernden Schneckenblechen besetzt sind, während sein mittlerer Bereich Wurfschaufeln aufweist. Durch diese Anordnung wird der von der Häckseltrommel ausgeworfene breite Gutstrom zu einem schmalen, dem Ende des verjüngten Bereiches des Förderschachtes entsprechenden Gutstrom derart zusammengeführt, dass die Seitenbereiche der schmalen Gutmatte mehr Gutmasse aufweisen als der mittlere Bereich. Dieser Gutstrom wird dann von einem mit Förderpaddeln besetzten Nachbeschleuniger in einen Auswurfschacht und von diesem auf ein Begleitfahrzeug abgeworfen.

Ein Nachteil des zuvor beschriebenen Feldhäckslers besteht darin, dass die Einrichtung, die das Häckselgut zusammenführt, Antriebsenergie benötigt und gewartet werden muss. Wenn anstatt eines Nachbeschleunigers im Gutabgabebereich des Förderschachtes ein Konditionierwalzenpaar vorgesehen ist, wie dies vielfach der Fall ist, tritt ein weiterer gravierender Nachteil auf. Dieser ist darin zu sehen, dass die in die Konditionierwalzen einlaufende geschmälerte Häckselgutmatte in dem Seitenbereich dicker ist, als im mittleren Bereich, wodurch zum einen die Lager des Konditionierwalzenpaares stark beansprucht werden, und zum anderen die Wirkung der Konditionierwalzen auf das Häckselgut ungleichmäßig ist.

Der vorliegenden Erfindung liegt daher die Aufgabe zugrunde einen Feldhäcksler, der eingangs näher bezeichneten Art, derart auszubilden, dass die auf die Breite des Förderschachtes im Gutabgabebereich verjüngte Häckselgutmatte im wesentlichen einheitlich dick ist, und dass Antriebsenergie für die die Häckselgutmatte verjüngende Einrichtung eingespart werden kann.

Die der Erfindung zugrunde liegende Aufgabe wird dadurch gelöst, dass dem sich in Transportrichtung verjüngenden Förderschacht statische Gutleiteinrichtungen zugeordnet sind, die eine Querförderung des Häckselgutes über die sich verjüngende Breite des Förderschachtes ermöglichen.
Eine derartige Ausbildung eines Feldhäckslers ermöglicht den Quertransport des Erntegutes im Förderschacht zur Vergleichmäßigung der Erntegutmattendicke in diesem Bereich, wobei die erfindungsgemäßen Einrichtungen zur Vergleichmäßigung der Mattendicke ohne Einsatz von Antriebsenergie arbeiten.

Auf vorteilhafte Weise können die das Häckselgut über die verjüngte Breite des Förderschachtes verteilenden Einrichtungen als an den schräg aufeinander zu verlaufenden Seitenwänden des Förderschachtes befestigte Leitelemente ausgeführt sein. Durch diese Anordnung wirken die Verteileinrichtungen bzw. die Leitelemente gemeinsam mit den Seitenwänden auf die zu verjüngende Gutstrommatte ein. Der mittlere Bereich der Gutstrommatte, der der Breite der Abgabeöffnung des Förderschachtes entspricht, bleibt allerdings völlig unberührt, so dass hier keinerlei Energie aufgezehrt wird.

Es hat sich als zweckmäßig erwiesen, die Leitelemente pflugscharähnlich auszubilden. Eine derartige Gestaltung der Leitelemente ist wenig aufwendig und in der Landtechnik ist es bekannt, dass gerade Pflugscharen das von ihnen ergriffene Gut gleichmäßig abschälen, wenden und verteilt zur Seite ablegen. Hierdurch entsteht der Vorteil, dass der Gutstrom nicht ungleichmäßig gestaucht sondern in zwei Schichten übereinander auf schmalerer Breite gelegt wird.

Wird, wie die Erfindung vorschlägt, Kunststoff als Material für die Leitelemente eingesetzt, lassen sich diese auf einfache Art und Weise in einem einzigen Spritzvorgang herstellen. Zudem besteht die Möglichkeit der Auswahl aus einer Vielzahl von Kunststoffen, beispielsweise mit Hinblick auf eine glatte Oberfläche und Verschleißfestigkeit. Selbstverständlich ist es nach einem weiteren Merkmal der Erfindung auch möglich, die Leitelemente aus Metall herzustellen. In den meisten Fällen wird man Stahl verwenden, so dass die Leitelemente äußerst stabil und verschleißfest sind. Werden besondere Anforderungen an die Leitelemente gestellt, schlägt die Erfindung vor, diese aus Verbundmaterial herzustellen. Es können beispielsweise mehrere Schichten unterschiedlichen Kunststoffmaterials verwendet werden. Eine Kombination von Kuriststoff und Stahl ist ebenfalls möglich. Welches Material auch immer für die erfindungsgemäßen Leitelemente eingesetzt wird, empfiehlt es sich auf jeden Fall, die Oberfläche, die mit dem Häckselmaterial in Berührung kommt, zu vergüten und reibungsarm auszubilden.

Die das Häckselgut gleichmäßig über die verjüngte Breite des Förderschachtes verteilenden Einrichtungen müssen aber nicht unbedingt Leitelemente sein, die an den Seitenwänden des Förderschachtes befestigt sind. Ein wesentliches Merkmal der Erfindung ist demzufolge auch darin zu sehen, dass der Boden des Förderschachtes konturiert ist und der konturierte Boden, die das Häckselgut gleichmäßig verteilende Einrichtung bildet. Dabei hat es sich als vorteilhaft herausgestellt, den Boden im Gutaufgabebereich eben, im weiteren Verlauf im Querschnitt muldenförmig und im Gutabgabebereich wieder eben auszubilden. Die Häckselgutmatte wird also von den konvergierenden Seitenwänden verjüngt und durch den konturierten Boden gleichmäßig - zur Förderschachtmitte verlagert und - über die Breite des verjüngten Bereiches verteilt. Eine sehr befriedigende Verteilung und Vergleichmäßigung wird dadurch erreicht, dass in Durchlaufrichtung betrachtet, der ebene Bodenteil im Gutaufnahmebereich kürzer ist als der ebene Bodenteil im Gutabgabebereich. Unterstützt wird die Verteilung noch dadurch, dass der Boden im mittleren muldenförmigen Bereich plane Seitenbereiche aufweist.

Im folgenden soll die Erfindung anhand zweier Ausführungsbeispiele und mehrerer dieser darstellenden Figuren erläutert werden.
Dabei zeigt:
- Fig. 1: den vorderen Teil eines selbstfahrenden Feldhäckslers in der Seitenansicht,
- Fig. 2: einen Teil des in Fig. 1 dargestellten Feldhäckslers in Draufsicht geschnitten,
- Fig. 3: den Förderschacht des Feldhäckslers perspektivisch in Gutflussrichtung gesehen,
- Fig. 4: den vorderen Teil eines selbstfahrenden Feldhäckslers in der Seitenansicht in abgeändeter Form,
- Fig. 5: einen Teil des in Fig. 4 dargestellten Feldhäckslers in der Seitenansicht im Schnitt,
- Fig. 6: die Kontur des Förderschachtbodens in Gutflussrichtung betrachtet,
- Fig.7: wie Fig. 6 den Förderschachtboden in zentraler Vorderansicht.

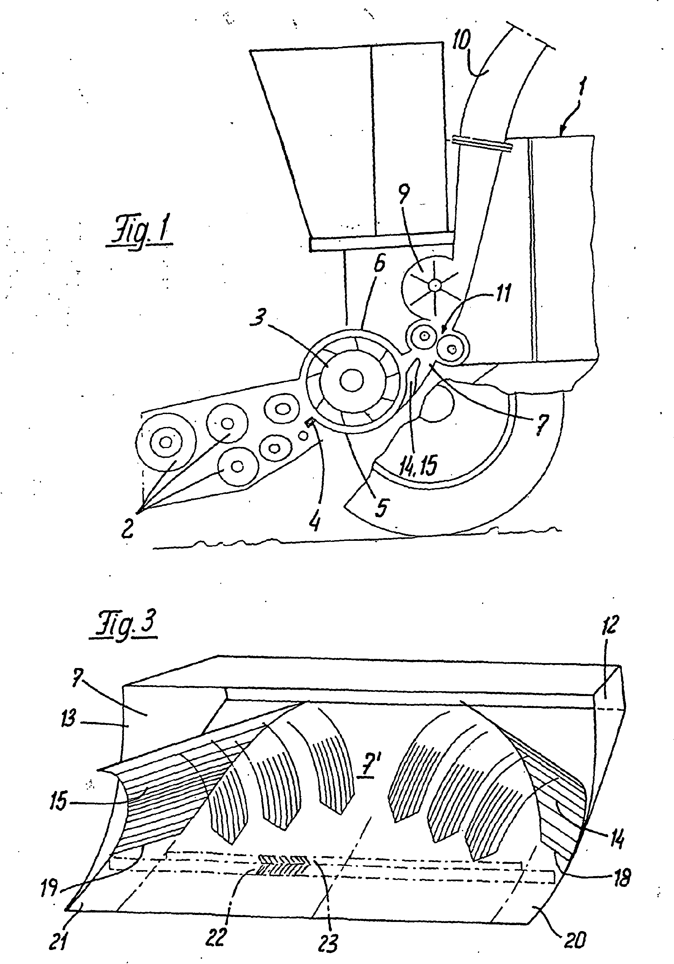

Mit 1 ist ein Feldhäcksler bezeichnet, der in an sich bekannter Weise eine vordere, nicht dargestellte Aufnahmezinkentrommel, daran anschließend Einzugsorgane 2 sowie eine messerbesetzte Häckseltrommel 3 aufweist. Letzterer ist eine maschinenfeste Gegenschneide 4 und ein Trommelboden 5 zugeordnet. An das Gehäuse 6, zu dem auch der Trommelboden 5 gehört, schließt sich ein Förderschacht 7 an. Dieser Schacht 7, weist im einlaufseitigem Bereich in etwa die Breite der Häckseltrommel 3 auf und verjüngt sich zu einem Auslauf 8, in dem ein Nachbeschleuniger 9 vorgesehen ist, der das Häckselgut über den Auswurfschacht 10 beispielsweise auf ein Transportfahrzeug schleudert. Wie insbesondere aus den Figuren 1, 2 und 4 hervorgeht, ist dem Nachbeschleuniger 9 ein am Ende des Förderschachtes 7 antreibbar gelagertes Konditionierwalzenpaar 11 vorgeordnet. Wie die Figuren 2 und 3 zeigen, sind mit den konvergierenden Seitenwänden 12 und 13 des Förderschachtes 7 Leitelemente 14 und 15 mittels Halter 16 und 17 fest verbunden. Die Leitelemente 14 und 15 sind, wie die Fig. 3 insbesondere erkennen lässt, pflugscharähnlich ausgebildet. Durch die beiden Schälkanten 18 und 19 der Leitelemente 14 und 15 werden die beiden Gutstreifen 20 und 21, welche die Breite des engen Auslaufs 8 des Förderschachtes 7 zu beiden Seiten überragen vom Förderschachtboden 7' abgeschält und aufgrund der Ausbildung der Leitelemente 14 und 15 über den verbleibenden mittleren Bereich gleichmäßig abgeworfen. Die dann dem Auslauf 8 zugeführte Gutmatte setzt sich dann aus einer unteren ursprünglichen Lage 22 und einer darauf angeordneten zweiten Lage 23 zusammen, wobei die Menge des Gutes der Matte 23 der Menge des Häckselgutes der beiden seitlichen umgeleiteten Gutstreifen 20 und 21 entspricht (siehe Fig.2 und 3). Die Wurfrichtung des zu verteilenden Materials aus den Randbereichen ist in der Figur 3 mit Pfeilen 24 angedeutet. Die Leitelemente 14 und 15 können sowohl aus Stahl als auch aus Kunststoff bestehen. Weiterhin ist es möglich, die Leitelemente mehrschichtig auszubilden, wobei einzelne Schichten aus unterschiedlichen Kunststoffen wie auch aus Schichten aus Stahl und Kunststoff sein können.

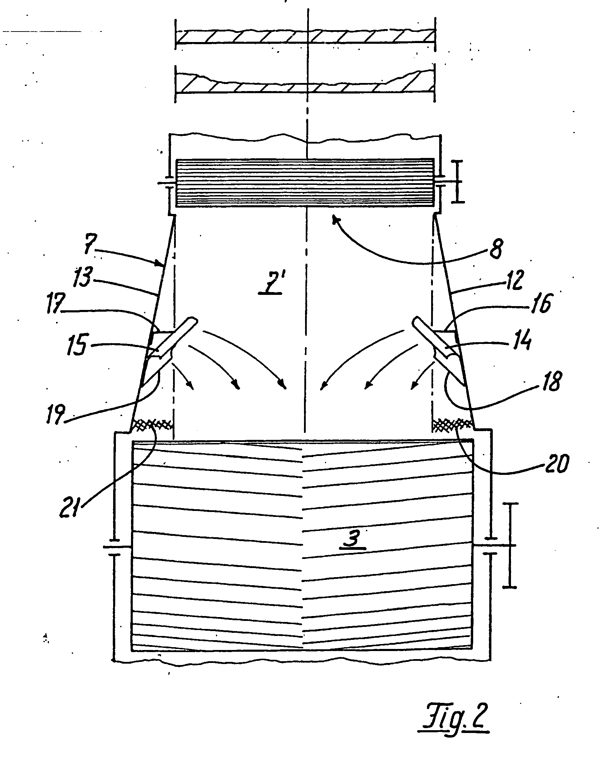

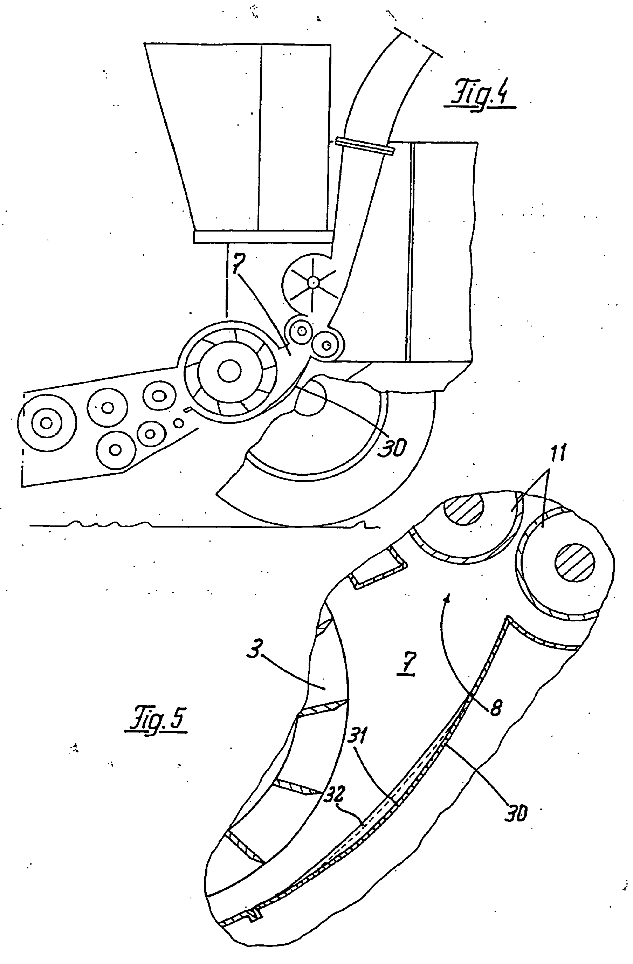

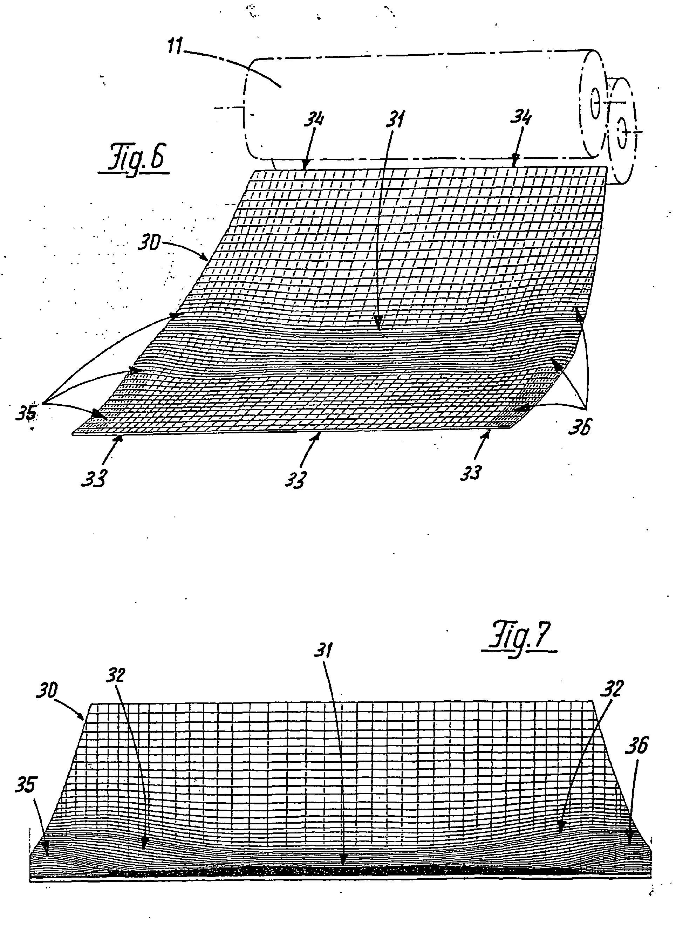

Die Fig. 4 unterscheidet sich von der Fig. 1 nur in soweit, als bei dem Feldhäcksler nach Fig. 4 keine Leitelemente im Bereich der Seitenwände vorgesehen sind. Vielmehr ist nach dem Beispiel der Fig. 4 der Boden 30 des Förderschachtes 7 konturiert. Die Fig. 5 zeigt einen Längsschnitt mittig durch den Förderschachtboden 30, welcher erkennen lässt, dass der mittlere Bereich 31 des Förderschachtbodens tiefer angeordnet ist.im Vergleich zu seinen beiden ansteigenden Seitenbereichen 32. Dies machen die Fig.6 und 7 durch Gitternetzschraffur deutlich. Gemäß der Figuren 6 und 7 ist der Einlaufbereich 33 des Förderschachtbodens 30 eben ausgebildet. Der sich daran anschließende mittlere Bereich 31 ist muldenförmig ausgebildet, wobei aber seine beiden Randbereiche 35 und 36 in Transportrichtung des Gutes eben verlaufen. Im Auslaufbereich 34 ist der Förderschachtboden 30 in etwa auf die Breite des Konditionierwalzenpaares 11 verjüngt und verläuft über seine gesamte Breite eben. Durch eine derartige Ausbildung eines Förderbodens 30 wird der Häckselgutstrom im Zusammenwirken mit den konvergierenden Seitenwänden des Förderschachtes 7 auf die Breite der Konditionierwalzen 11 gleichmäßig zusammengeführt.

Sowohl nach der Ausführungsform der Fig. 1 bis 3 als auch bei der Ausführungsform nach den Fig. 4 bis 7 wird dem Konditionierwalzenpaar 11 eine gleichmäßig dicke Häckselgutmatte zugeführt, so dass einerseits die Belastung der Konditionierwalzen gleichmäßig ist und andererseits die Häckselgutmatte über ihre gesamte Breite gleich gut konditioniert werden kann.

### Bezugszeichenliste

- 1: Feldhäcksler
- 2: Einzugsorgane
- 3: Häckseltrommel
- 4: Gegenschneide
- 5: Trommelboden
- 6: Gehäuse
- 7: Förderschacht
- 7': Förderschachtboden
- 8: Auslauf
- 9: Nachbeschleuniger
- 10: Auswurfschacht
- 11: Konditionierwalzenpaar
- 12: Seitenwand
- 13: Seitenwand
- 14: Leitelement
- 15: Leitelement
- 16: Halter
- 17: Halter
- 18: Schälkante
- 19: Schälkante
- 20: Gutstreifen
- 21: Gutstreifen
- 22: Lage
- 23: Lage
- 24: Pfeile
- 30: Boden
- 31: mittlerer Bereich
- 32: Seitenbereiche
- 33: Einlaufbereich
- 34: Auslaufbereich
- 35: Randbereich
- 36: Randbereich

## Patentansprüche

1. Feldhäcksler mit einer rotierenden Häckseltrommel (3), an die sich ein in Transportrichtung verjüngender Förderschacht (7) anschließt, der an seinem gutabgabeseitigem Ende in einen Auswurfschacht mündet, wobei der Häckseltrommel zumindest ein erntegutförderndes Arbeitsorgan nachgeordnet ist,
**dadurch gekennzeichnet,**
**dass** dem sich in Transportrichtung verjüngenden Förderschacht (7) statische Gutleiteinrichtungen (14,15, 33-36) zugeordnet sind, die eine Querförderung des Häckselgutes (22,23) über die sich verjüngende Breite des Förderschachtes (7) ermöglichen.

2. Feldhäcksler nach Anspruch 1,
**dadurch gekennzeichnet,**
**dass** die statischen Gutleiteinrichtungen (14,15) als an den konvergierenden Seitenwänden (12, 13).des Förderschachtes (7) befestigte Leitelemente (14,15) ausgeführt sind.

3. Feldhäcksler nach einem oder mehreren der Ansprüche 1 und 2,
**dadurch gekennzeichnet,**
**dass** die Leitelemente (14 und 15) pflugscharähnlich ausgebildet sind.

4. Feldhäcksler nach einem oder mehreren der vorhergehenden Ansprüche,
**dadurch gekennzeichnet,**
**dass** die Leitelemente (14, 15) aus Kunststoff bestehen.

5. Feldhäcksler nach einem oder mehreren der Ansprüche 1 bis 3,
**dadurch gekennzeichnet,**
**dass** die Leitelemente (14,15) aus Metall bestehen.

6. Feldhäcksler nach einem oder mehreren der Ansprüche 1 bis 3,
**dadurch gekennzeichnet,**
**dass** die Leitelemente (14,15) aus Verbundmaterial bestehen.

7. Feldhäcksler nach einem oder mehreren der vorhergehenden Ansprüche,
**dadurch gekennzeichnet,**
**dass** die Leitelemente eine vergütete reibungsarme Oberfläche aufweisen.

8. Feldhäcksler nach Anspruch 1,
**dadurch gekennzeichnet,**
**dass** die statischen Gutleiteinrichtungen (33-36) durch eine Konturierung des Bodens (30) des Förderschachtes (7) gebildet werden.

9. Feldhäcksler nach einem oder mehreren der vorhergehenden Ansprüche,
**dadurch gekennzeichnet,**
**dass** der Boden (30) im Gutaufgabebereich (33) im wesentlichen eben, im weiteren Verlauf im Querschnitt muldenförmig (31) und im Gutabgabebereich (34) wiederum im wesentlichen eben ausgebildet ist.

10. Feldhäcksler nach einem oder mehreren der vorhergehenden Ansprüche,
**dadurch gekennzeichnet,**
**dass** der Boden (30) im mittleren muldenförmigen Bereich (31) im wesentlichen plane Seitenbereiche (35,36) aufweist.

11. Feldhäcksler nach einem oder mehreren der vorhergehenden Ansprüche,
**dadurch gekennzeichnet,**
**dass** in Gutdurchlaufrichtung betrachtet der ebene Bodenteil (33) im Gutaufnahmebereich kürzer ist als der ebene Bodenteil (34) im Gutabgabebereich.

## Claims

1. A forage harvester comprising a rotating chopping drum (3) adjoined by a conveyor shaft (7) which narrows in the transport direction and which at its material discharge end opens into an ejection shaft, wherein arranged downstream of the chopping drum is at least one crop material-conveying working member,
**characterised in that**
associated with the conveyor shaft (7) which narrows in the transport direction are static material guide devices (14, 15, 33-36) which permit transverse conveying of the chopped material (22, 23) over the reducing width of the conveyor shaft (7).

2. A forage harvester according to claim 1 **characterised in that** the static material guide devices (14, 15) are in the form of guide elements (14, 15) fixed to the converging side walls (12, 13) of the conveyor shaft (7).

3. A forage harvester according to one or more of claims 1 and 2 **characterised in that** the guide elements (14 and 15) are of a ploughshare-like configuration.

4. A forage harvester according to one or more of the preceding claims **characterised in that** the guide elements (14, 15) comprise plastic material.

5. A forage harvester according to one or more of claims 1 to 3 **characterised in that** the guide elements (14, 15) comprise metal.

6. A forage harvester according to one or more of claims 1 to 3 **characterised in that** the guide elements (14, 15) comprise composite material.

7. A forage harvester according to one or more of the preceding claims **characterised in that** the guide elements have a heat-treated low-friction surface.

8. A forage harvester according to claim 1 **characterised in that** the static material guide devices (33-36) are formed by a contouring of the bottom (30) of the conveyor shaft (7).

9. A forage harvester according to one or more of the preceding claims **characterised in that** the bottom (30) is substantially flat in the material feed region (33), trough-shaped (31) in cross-section in its further configuration and once again substantially flat in the material discharge region (34).

10. A forage harvester according to one or more of the preceding claims **characterised in that** the bottom (30) in the central trough-shaped region (31) has substantially planar side regions (35, 36).

11. A forage harvester according to one or more of the preceding claims **characterised in that** considered in the material through-flow direction the flat bottom portion (33) in the material pickup region is shorter than the flat bottom portion (34) in the material discharge region.

## Revendications

1. Ensileuse comportant un tambour hacheur (3) rotatif avec placée à la suite de celui-ci une chambre de transfert (7), dont la largeur décroît dans la direction de transport et qui, à son extrémité côté sortie, débouche dans une chambre de décharge, au moins un organe de travail qui assure le transport du produit récolté étant disposé en aval du tambour hacheur, **caractérisée par le fait qu'**à la chambre de transfert (7), dont la largeur décroît dans la direction de transport, sont associés des dispositifs de guidage de produit (14, 15, 33-36) statiques, qui permettent un transport transversal du produit broyé sur la largeur décroissante de la chambre de transfert (7).

2. Ensileuse selon la revendication 1, **caractérisée par le fait que** les dispositifs de guidage de produit (14, 15, 33-36) statiques sont conformés en éléments de guidage (14, 15) fixés aux parois latérales (12, 13) convergentes de la chambre de transfert (7).

3. Ensileuse selon une ou plusieurs des revendications 1 et 2, **caractérisée par le fait que** les éléments de guidage (14 et 15) sont conformés en soc de charrue.

4. Ensileuse selon une ou plusieurs des revendications précédentes, **caractérisée par le fait que** les éléments de guidage (14, 15) sont en matière plastique.

5. Ensileuse selon une ou plusieurs des revendications 1 à 3, **caractérisée par le fait que** les éléments de guidage (14, 15) sont en métal.

6. Ensileuse selon une ou plusieurs des revendications 1 à 3, **caractérisée par le fait que** les éléments de guidage (14, 15) sont en matériau composite.

7. Ensileuse selon une ou plusieurs des revendications précédentes, **caractérisée par le fait que** les éléments de guidage présentent une surface traitée à faible frottement.

8. Ensileuse selon la revendication 1, **caractérisée par le fait que** les dispositifs de guidage de produit (33-36) statiques sont formés par un profil adapté du fond (30) de la chambre de transfert (7),

9. Ensileuse selon une ou plusieurs des revendications précédentes, **caractérisée par le fait que** le fond dans la zone d'entrée de produit (33) est essentiellement plan, dans la portion suivante présente une section en forme de cuvette (31) et dans la zone de sortie (34) est de nouveau essentiellement plan.

10. Ensileuse selon une ou plusieurs des revendications précédentes, **caractérisée par le fait que** le fond dans la zone intermédiaire en forme de cuvette (31) présente des zones latérales (35, 36) essentiellement planes.

11. Ensileuse selon une ou plusieurs des revendications précédentes, **caractérisée par le fait que**, vu dans la direction d'écoulement du produit, la portion de fond (33) plane dans la zone d'entrée de produit est plus courte que la portion de fond (34) plane dans la zone de sortie de produit.
